# EUROPÄISCHE PATENTSCHRIFT

(11) **EP 2 164 733 B1**
(45) Veröffentlichungstag und Bekanntmachung des Hinweises auf die Patenterteilung: **01.05.2019**
(21) Anmeldenummer: 08758580.8
(22) Anmeldetag: 16.05.2008
(51) Int. Cl.: B60T 13/26, B60T 13/68, B60T 17/22, B60T 7/20, B60T 8/26

(54) **BREMSANLAGE FÜR EIN MIT EINEM ANHÄNGER PNEUMATISCH KOPPELBARES NUTZFAHRZEUG UND VERFAHREN ZUM BETREIBEN EINER SOLCHEN BREMSANLAGE**
BRAKING SYSTEM FOR A UTILITY VEHICLE THAT CAN BE PNEUMATICALLY COUPLED TO A TRAILER, AND METHOD FOR OPERATING SUCH A BRAKING SYSTEM
SYSTÈME DE FREINAGE POUR UN VÉHICULE UTILITAIRE POUVANT ÊTRE ACCOUPLÉ PNEUMATIQUEMENT À UNE REMORQUE ET PROCÉDÉ POUR FAIRE FONCTIONNER UN TEL SYSTÈME DE FREINAGE

(30) Priorität: 16.05.2007 DE 102007023345
(43) Veröffentlichungstag der Anmeldung: 24.03.2010
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2008/003952
(87) Internationale Veröffentlichungsnummer: WO 2008/138640

(56) Entgegenhaltungen:
- EP-A- 0 532 863
- DE-A1- 19 706 982
- US-A- 3 993 362

## Beschreibung

Die Erfindung betrifft eine Bremsanlage für ein mit einem Anhänger pneumatisch koppelbares Nutzfahrzeug, mit,mindestens einer elektronischen Steuereinheit, einer durch die mindestens eine elektronische Steuereinheit elektrisch schaltbaren Ventileinrichtung, wobei in einem Schaltzustand der Ventileinrichtung Druck für die Anhängerbremsanlage aufbaubar ist, der eine Bremsung des Anhängers veranlasst, und einem Drucksensor, der den Druck für die Anhängerbremsanlage erfasst und ein entsprechendes Signal an die elektronische Steuereinheit übermittelt, wobei der Druck für die Anhängerbremsanlage von der elektronischen Steuereinheit durch gepulstes Schalten der Ventileinrichtung unter Berücksichtigung des von dem Drucksensor erfassten Drucks für die Anhängerbremsanlage beeinflussbar ist.

Die Erfindung betrifft weiterhin ein Verfahren zum Steuern einer Bremsanlage für ein mit einem Anhänger pneumatisch koppelbares Nutzfahrzeug, mit mindestens einer elektronischen Steuereinheit, einer durch die mindestens eine elektronische Steuereinheit elektrisch schaltbaren Ventileinrichtung, wobei in einem Schaltzustand der Ventileinrichtung Druck für die Anhängerbremsanlage aufbaubar ist, der eine Bremsung des Anhängers veranlasst, und einem Drucksensor, der den Druck für die Anhängerbremsanlage erfasst und ein entsprechendes Signal an die elektronische Steuereinheit übermittelt, wobei der Druck für die Anhängerbremsanlage von der elektronischen Steuereinheit durch gepulstes Schalten der Ventileinrichtung unter Berücksichtigung des von dem Drucksensor erfassten Drucks für die Anhängerbremsanlage beeinflusst wird.

Im Zusammenhang mit Nutzfahrzeugen, die mit einem Anhänger gekoppelt werden können, ist es bekannt, das Fahrverhalten durch eine so genannte Streckbremsfunktion zu stabilisieren. Durch die Streckbremsfunktion wird verhindert, dass der Anhänger auf Gefällestrecken eine höhere Geschwindigkeit als das Zugfahrzeug erreicht, da eine solche Situation letztlich zu einem Einknicken des Zuges und somit zu einer sehr unsicheren Fahrsituation führen könnte. Eine solche Streckbremsfunktion kann insbesondere durch das gepulste Ansteuern von Ventilen realisiert werden, die den Bremsdruck der Anhängerbremsanlage beeinflussen. Das gepulste Ansteuern kann beispielsweise frequenzmoduliert und, insbesondere bei konstanter Frequenz, pulsweitenmoduliert erfolgen. Bei den angesteuerten Ventilen kann es sich insbesondere um Schaltventile handeln, welche in erster Linie für das Umschalten zwischen einem belüftenden und einem entlüftenden Zustand vorgesehen sind, also im Prinzip keine dosierte Druckversorgung zur Verfügung stellen sollen. Indem nun solche Schaltventile beispielsweise pulsweitenmoduliert angesteuert werden, das heißt mit einem bestimmten Tastverhältnis zwischen dem belüftenden und dem entlüftenden Zustand umgeschaltet werden können, ist eine quasi kontinuierliche Druckdosierungim Bereich der ausgesteuerten Druckluft erzielbar. Problematisch ist allerdings, dass eine gepulste Ansteuerung der Schaltventile zu extrem hohen Lastwechselzahlen führt, wobei hierdurch die Ventile hochgradig belastet werden und in ihrer Lebensdauer beschränkt werden.

Die DE 197 06 982 A1 beschreibt eine Bremsanlage zur Steuerung der Bremsung eines Anhängerfahrzeugs, wobei bei Betätigung der Betriebsbremse eine automatische lastabhängige Bremsung des Anhängers eingeleitet wird.

Die US 3,993,362 beschreibt ein Streckbrems- und Schleuderkontrollsystem, bei dem unabhängig vom Vorliegen einer Betriebsbremsung zusätzlich eine einseitige Bremskraft am Anhänger zur Fahrzeugstabilisierung erzeugt wird.

Die EP 0 532 863 A1 beschreibt eine Bremsdruckregelung für einen Fahrzeugzug, bei der ein am Anhänger wirkender Bremsdruck, der aufgrund einer Betriebsbremsung erzeugt wird, an den am Zugfahrzeug bereitgestellten Bremsdruck angepasste wird, um einen gleichmäßigen Verschleiß am gesamten Fahrzeug zu erreichen.

Der Erfindung liegt die Aufgabe zugrunde, die Belastung von Schaltventilen im Zusammenhang mit einer durch Pulsweitenmodulation zur Verfügung gestellten Streckbremsfunktion zur Verbesserung der Fahrzeugstabilität zu reduzieren.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Bremsanlage dadurch auf, dass die elektronische Steuereinheit das gepulste Schalten zum Herbeiführen einer Bremsung des Anhängers bei nicht aktiver Betriebsbremse des Zugfahrzeugs nur dann zulässt, wenn eine Bedingung vorliegt, bei der eine Bremsung des Anhängers trotz nicht aktiver Betriebsbremse des Zugfahrzeugs sinnvoll sein könnte, und eine solche Streckbremsung von einem Signalgeber angefordert wird. Die Erfindung stellt somit eine Art Filter zur Verfügung, der dafür sorgt, dass außerhalb von tatsächlich erwünschten und sinnvollen Streckbremsphasen keine unnötige Ansteuerung der Schaltventile erfolgt. Die Schaltventile sind also nicht mehr immer dann, wenn der Fahrer des Nutzfahrzeugs einen entsprechenden Wunsch über einen Signalgeber äußert, einer ständigen gepulsten Ansteuerung ausgesetzt, was sich positiv auf die Lebensdauer der angesteuerten Magnetventile und der Bremsen auswirkt. Die gepulste Ansteuerung kann beispielsweise pulsweitenmoduliert zu einer Variation des zu beeinflussenden Druckes führen, und die Erfindung wird im Rahmen der vorliegenden Offenbarung ohne Einschränkung der Allgemeinheit vorwiegend am Beispiel der Pulsweitenmodulation erläutert. Bei dem erwähnten Druck für die Anhängerbremsanlage kann es sich um einen Steuerdruck handeln, auf dessen Grundlage der eigentliche Bremsdruck für die Anhängerbremsanlage erzeugt wird.

Erfindungsgemäß ist weiterhin vorgesehen, dass die Bedingung dem Vorliegen mindestens eines der folgenden Zustände entspricht: Die Fahrzeuggeschwindigkeit ist kleiner als ein Schwellenwert, das Gaspedals wird nicht betätigt, der Motor bremst, der Motor erzeugt kein nutzbares Drehmoment, ein Retardersystem ist aktiv, das Fahrzeug befindet sich auf einer Gefällestrecke. Ein solcher Fahrzustand liegt während einer Dauerbremsung häufig vor, da hier das Zugfahrzeug durch den Motor und das Retardersystem gebremst wird, während der Anhänger nicht gebremst wird. Das Retardersystem und die Motorbremse werden auch als Dauerbremsen bezeichnet. Diese werden häufig durch einen separaten Geber oder Schalter zugeschaltet, wobei diese Schalter meist stufbar geschaltet sind. Es sind auch Anordnungen bekannt, bei welchen die Motorbremse unabhängig vom Retardersystem eingeschaltet werden kann, wobei jedoch meistens eine kombinierte Beeinflussbarkeit und eine damit einhergehenden Abstimmung der Systeme aufeinander vorliegt. Häufig ist vorgesehen, die Dauerbremsverzögerung auf die Verzögerung einer vorangegangenen Betriebsbremsbremsung automatisch abzustimmen. Der Signalgeber für die Streckbremsung kann separat vorgesehen sein oder mit dem Geber für die Motorbremsung beziehungsweise die Retarderbremsung kombiniert werden. Ebenfalls ist es möglich, die Handsteuereinheit für eine elektrische Feststellbremse mit einer Zusatzfunktion auszustatten, so dass hierüber das Signal für das Einleiten einer Streckbremsung erzeugt werden kann. Die Bedingung für das Zulassen der Streckbremsung kann auf dieser Grundlage an die charakteristischen Fahrzustände des Fahrzeugs gekoppelt werden. Dabei ist es möglich, lediglich eine oder aber auch mehrere, insbesondere alle der genannten Fahrzustände zu berücksichtigen. Beispielsweise kann verhindert werden, dass eine pulsweitenmodulierte Ansteuerung der Schaltventile, das heißt der Magnetventile, erfolgt, wenn sich das Fahrzeug mit einer hohen Geschwindigkeit bewegt, bei der keine Streckbremsfunktion erfolgen sollte. Es kann weiterhin vorgesehen sein, dass bei betätigtem Gaspedal eine Streckbremsfunktion in jedem Fall verhindert wird, denn es ist unwahrscheinlich, dass in einem solchen Zustand ein Auflaufen des Anhängers auf das Zugfahrzeug erfolgen könnte. Weiterhin kann ein Kriterium für das Zulassen der Streckbremsung sein, dass der Motor bremst, da dies eine typische Fahrsituation kennzeichnet, die eine Streckbremsung sinnvoll oder erforderlich erscheinen lässt. Weiterhin kann, insbesondere über das Motorsteuergerät, geprüft werden, ob der Motor ein nutzbares positives Drehmoment erzeugt. Ist dies nicht der Fall, so ist dies ein Kriterium dafür, die Streckbremsung zuzulassen. Durch kombiniertes Dauerbremsen unter Verwendung eines Retardersystems, kann ebenfalls eine Verzögerung des Nutzfahrzeugs herbeigeführt werden. Ist ein solches Retardersystem aktiv, so kann es sinnvoll sein, eine Streckbremsung zuzulassen. Ebenfalls kann geprüft werden, ob sich das Fahrzeug auf einer Gefällestrecke befindet, wobei diese Prüfung auf der Grundlage einer Neigungssensorik oder von Navigationsdaten erfolgt. Ergibt diese Überprüfung, dass kein Gefälle vorliegt, so kann auch die pulsweitenmodulierte Ansteuerung der Schaltventile unterdrückt werden. Bei der Steuerung der Streckbremsfunktion können auch die Raddrehzahlen von Zugfahrzeug und Anhänger sowie der Lenkwinkel berücksichtigt werden. Beispielsweise kann auf der Grundlage eines Schlupfvergleiches zwischen dem Anhänger und dem Zugfahrzeug festgestellt werden, dass ein Auflaufen des Anhängers auf das Zugfahrzeug bevorsteht. Die Berücksichtigung des Lenkwinkels kann sinnvoll sein, da bei unterschiedlichen Lenkwinkeln das Fahrzeug durch eine Streckbremsung in unterschiedlicher Weise beeinflusst wird. Im Hinblick auf das Fahrverhalten des Nutzfahrzeugs kann es auch sinnvoll sein, die von einem E-Differential bewirkte unterschiedliche Lastverteilung auf eine Dauerbremsung, die insbesondere vom Motor und einer Retarderbremse herbeigeführt wird, zu berücksichtigen. Bei einem E-Differential handelt es sich um ein stufenloses Differential zur Abstimmung von Motorbeschleunigungsmomenten an die durch die Räder auf die Fahrbahn aufbringbaren Kräfte. Ein E-Differential verteilt die Radkräfte in sinnvoller Weise individuell auf die verschiedenen Räder. Es ist sinnvoll, im Anschluss an eine Dauerbremsung bei einer Beschleunigung des Fahrzeugs durch Betätigen des Gaspedals, den Zug möglichst schnell zu strecken und die Motordrehzahl nicht in einen Bereich abfallen zu lassen, bei der der Motor unter Umständen absterben könnte. In diesem Zusammenhang kann erwünscht sein, die Streckbremse vor dem Übergang zur erneuten Beschleunigung des Zuges zu lösen, wodurch insgesamt die Bauteilebeanspruchung reduziert wird. Weitere Beachtung kann der Wegsensorik der Fahrwerksregelung und der Luftfederung beigemessen werden, die zusammen mit dem Lenkwinkel und dem Schlupf bei Kurvenfahrt einen Anhaltspunkt über die Schubkräfte des Anhängers bei aktivierter Dauerbremsung geben. Moderne Fahrzeuge haben außerdem häufig eine Aktivlenkung, die beim Streckbremsvorgang der Steuerelektronik Lenkwinkelsignale zur Verfügung stellen kann, um so eine automatische Lenkwinkelkorrektur vorzunehmen. Auf dieser Grundlage kann ein Streckbremsvorgang frühzeitig beendet werden, um auch hierdurch die Beanspruchung der Bauteile herabzusetzen sowie die Fahrstabilität zu verbessern. Ist weiterhin eine aktive Stossdämpferregelung vorhanden, so kann ein Überführen des Stossdämpfers zu einem höheren Härtegrad hilfreich sein, um Wankbewegungen zu verhindern und um auch auf diese Weise einen Streckbremsvorgang schneller beenden zu können, wobei auch hierdurch eine Beanspruchung der steuernden Bauteile, das heißt der Ventile und der Bremsen, herabgesetzt und die Fahrstabilität verbessert wird.

Erfindungsgemäß ist ferner vorgesehen, dass der mindestens einen elektronischen Steuereinheit ein von dem manuell bedienbaren Signalgeber erzeugbares Signal zuführbar ist und in Abhängigkeit der Anwesenheit des Signals die Streckbremsfunktion unterdrückbar ist. Dem Fahrer wird so die Möglichkeit gegeben, die Streckbremsfunktionalität des Nutzfahrzeugs von vorn herein abzuschalten.

Nützlicherweise ist vorgesehen, dass der Ventileinrichtung ein Druckbegrenzer vorgeschaltet ist. Ein Druckbegrenzer ist sinnvoll, da die Anzahl der erforderlichen Schaltzyklen aufgrund des Erfordernisses häufigeren und feinfühligeren Taktens mit zunehmenden Versorgungsdruck ebenfalls ansteigt. Durch den Druckbegrenzer wird also ein vorteilhafter Einfluss auf die Lebensdauer der Ventile erzielt.

Es kann vorgesehen sein, dass die Ventileinrichtung ein 3/2-Wegeventil ist. Auf dieser Grundlage kann eine Belüftungs- und Entlüftungsfunktion mit einem einzigen Ventil realisiert werden.

Ebenfalls kann vorgesehen sein, dass die Ventileinrichtung zwei 2/2-Wegeventile umfasst. Dann dient eines der 2/2-Wegeventile der Entlüftung, während mit dem anderen belüftet wird. Wird keines der Ventile betätigt, so wird der Druck gehalten, wobei aufgrund der kritischen Fahrsituation während einer Streckbremsung sehr häufig be- und entlüftet wird.

Es ist möglich, dass die Ventileinrichtung den Steuerdruck direkt zur Verfügung stellt. Eine solche als Magnetventil ausgelegt Ventileinrichtung muss einen ausreichenden Strömungsquerschnitt zur Verfügung stellen.

Ebenfalls ist es denkbar, dass die Ventileinrichtung ein Relaisventil ansteuert, welches den Steuerdruck zur Verfügung stellt. Die indirekte Bereitstellung des Steuerdrucks durch die pulsweitenmoduliert angesteuerte Ventileinrichtung über ein Relaisventil ist nützlich, da die pulsweitenmoduliert angesteuerten Schaltventile dann unabhängig von dem für die Streckbremsung erforderlichen Steuerdruck dimensioniert und ausgelegt werden können. Die Druckpulse werden in der Steuerkammer des Relaisventils zu einem mittleren Druck integriert, welcher dann als Steuerdruckvorgabe der Anhängerbremsanlage zugeführt wird.

Gemäß einer bevorzugten Ausführungsform der vorliegenden Erfindung ist vorgesehen, dass die Ventileinrichtung in ein Anhängersteuermodul integriert ist, welches die Anhängerbremsanlage steuert und mit Druckluft versorgt.

Es ist aber auch denkbar, dass die Ventileinrichtung in eine elektropneumatische Steuereinheit integriert ist, welche die Feststellbremse des Zugfahrzeugs und die Anhängerbremsanlage über ein Anhängersteuermodul pneumatisch steuert.

In diesem Zusammenhang ist dann nützlich, dass in einem Leitungsstrang der elektronpneumatischen Steuereinheit, der mit einem Federspeicherzylinder der Feststellbremse des Zugfahrzeugs und mit einem Steuereingang des Anhängersteuermoduls in Verbindung steht, mindestens eine Drossel vorgesehen ist, die bei einem Druckabbau im Bereich des Steuereingangs des Anhängersteuermoduls einen Druckabbau in dem Federspeicherzylinder verzögert. Da die elektropneumatische Steuereinheit sowohl den Steuereingang des Anhängersteuermoduls als auch die Feststellbremszylinder mit der Druckluftversorgung koppelt, könnte ein Druckverlust im Bereich des Anhängersteuermoduls ein schlagartiges Zusammenbrechen des Druckes in allen damit in Verbindung stehenden Leitungen der elektropneumatischen Steuereinheit bewirken, so auch im Bereich des Federspeicherzylinders. Dies hätte zur Folge, dass das Zugfahrzeug schlagartig durch die Feststellbremse gebremst wird. Dies wird verhindert, indem durch Drosselung ein Druckabbau im Bereich der Federspeicherzylinder verlangsamt wird.

Darauf aufbauend kann dann noch vorgesehen sein, dass ein unerwarteter Druckabbau im Bereich des Steuereingangs des Anhängersteuermoduls durch den Drucksensor erfassbar ist und der Druck in dem Federspeicherzylinder der Feststellbremse durch Umschalten eines Ventils gehalten werden kann. Der Drucksensor, welcher auch im Zusammenhang mit der pulsweitenmodulierten Ansteuerung der Ventileinrichtung verwendet wird, kann also eingesetzt werden, um ein unerwartetes Absinken des Druckes im Bereich des Anhängersteuermoduls zu erfassen und dann den Federspeicherzylinder durch Umschalten einer Ventileinrichtung von der Drucksenke abzutrennen. In Kombination mit der Druckdrosselung kann so unabhängig vom Umschalten und einer Druckerfassung zunächst der Druckabbau im Federspeicherzylinder verlangsamt und bei Bedarf dann durch Umschalten des Ventils vollständig gestoppt werden.

Weiterhin kann vorgesehen sein, dass das Signal variabel ist, wobei mindestens eine Eigenschaft des Signals von der Betätigungsweise des auf verschiedene Weise betätigbaren Signalgebers abhängt und die mindestens eine Eigenschaft des Signals das Bremsverhalten des Anhängers beeinflusst. Insbesondere kann ein Geber vorgesehen sein, der über unterschiedliche Wege betätigt werden kann. Der aufgebaute Druck für die Anhängerbremse kann so von dem Geberweg abhängig beeinflusst werden.

Ebenfalls kann vorgesehen sein, dass die Betätigungszeit des Signalgebers das Bremsverhalten des Anhängers beeinflusst. So kann beispielsweise vorgesehen sein, dass bei längerer Geberbetätigung ein höherer Druck aufgebaut wird.

Nützlicherweise ist weiterhin vorgesehen, dass Raddrehzahlsensoren vorgesehen sind, deren Signale der mindestens einen elektronischen Steuereinheit zuführbar sind, und dass die im Zusammenhang mit der Bedingung für das Zulassen eines gepulsten Schaltens der Ventileinrichtung herangezogene Fahrzeuggeschwindigkeit aus Signalen der Drehzahlsensoren ableitbar sind. Beispielsweise kann auf der Grundlage eines Schlupfvergleiches zwischen dem Anhänger und dem Zugfahrzeug festgestellt werden, dass ein Auflaufen des Anhängers auf das Zugfahrzeug bevorsteht. Seitens des Zugfahrzeugs können zusätzlich das Tachosignal oder Daten eines Navigationssystems als Korrekturwerte hinzugezogen werden. Die Verwendung von aktiven Raddrehzahlsensoren ermöglicht insbesondere bei kleinen Drehzahlen die Bereitstellung sehr gut verarbeitbarer Werte, so dass ein schnelles Stabilisieren des Fahrzeugs ermöglicht wird.

Es kann weiterhin vorgesehen sein, dass die Anhängerbremsanlage Scheibenbremsen aufweist. Dies ist insbesondere in Kombination mit aktiven Raddrehzahlsensoren sinnvoll, da Scheibenbremsen eine sensitive Druckrücknahme und eine verbesserte Dosierbarkeit mit geringer Hysterese insbesondere bei kleinen Fahrzeuggeschwindigkeiten ermöglichen. Besonders bei schwierigen Fahrbahnverhältnissen, beispielsweise mit Splitt (U-Splitt), kann so ein unerwünschtes Blockieren der Räder vermieden werden.

Die Erfindung baut auf dem gattungsgemäßen Verfahren dadurch auf, dass die elektronische Steuereinheit das gepulste Schalten zum Herbeiführen einer Bremsung des Anhängers bei nicht aktiver Betriebsbremse des Zugfahrzeugs nur dann zulässt, wenn eine Bedingung vorliegt, bei der eine Bremsung des Anhängers trotz nicht aktiver Betriebsbremse des Zugfahrzeugs sinnvoll sein könnte, und eine solche Streckbremsung von einem Signalgeber angefordert wird.

Erfindungsgemäß ist vorgesehen, dass die Bedingung dem Vorliegen mindestens eines der folgenden Zustände entspricht: die Fahrzeuggeschwindigkeit ist kleiner als ein Schwellenwert, das Gaspedals wird nicht betätigt, der Motor bremst, der Motor erzeugt kein nutzbares Drehmoment, ein Retardersystem ist aktiv, das Fahrzeug befindet sich auf einer Gefällestrecke.

Erfindungsgemäß ist vorgesehen, dass während einer Streckbremsung die Drehzahl des Motors des Nutzfahrzeugs überwacht wird. Diese Drehzahlüberwachung kann beispielsweise vom Motorsteuergerät des Nutzfahrzeugs vorgenommen werden, wobei diesbezügliche Informationen an die für die Streckbremsung verantwortliche elektronische Steuereinheit übertragen werden. Eine solche Drehzahlüberwachung ist nützlich, da durch die Streckbremsung die Drehzahl in einem ungünstigen Fall in einen Bereich abfallen kann, bei der ein Absterben oder Abwürgen des Motors zu erwarten ist. Dies ist zu verhindern, da dann alle oder nahezu alle funktionellen Elemente des Fahrzeugs in eine Back-up-Betriebsart übergehen, indem beispielsweise von einer elektronischen Steuerung zu einer pneumatischen Steuerung übergegangen wird, so dass nur noch eine sehr eingeschränkte Funktionalität der gesamten Bremsanlage zur Verfügung steht. In kritischen Fahrsituationen wird hierdurch die Manövrierfähigkeit beeinträchtigt.

Auf diese Weise werden die Vorteile und Besonderheiten der erfindungsgemäßen Bremsanlage auch im Rahmen eines Verfahrens umgesetzt. Dies gilt auch für die nachfolgend angegebenen besonders bevorzugten Ausführungsformen des erfindungsgemäßen Verfahrens.

Weiterhin kann vorgesehen sein, dass ein unerwarteter Druckabbau im Bereich des Steuereingangs des Anhängersteuermoduls durch den Drucksensor erfasst wird und der Druck in dem Federspeicherzylinder der Feststellbremse durch Umschalten eines Ventils gehalten wird.

Es ist weiterhin bevorzugt, dass eine Temperatur im Bereich der Anhängerbremsanlage erfasst wird und beim Überschreiten einer vorgegebenen Temperaturschwelle der Druck für die Anhängerbremsanlage verringert wird. Dabei handelt es sich um eine Sicherheitsmaßnahme, auf deren Grundlage die Belastung der Anhängerbremsanlage und der Ventile reduziert wird.

In diesem Zusammenhang kann weiterhin vorgesehen sein, dass eine Temperatur im Bereich der Anhängerbremsanlage erfasst wird und beim Überschreiten einer vorgegebenen Temperaturschwelle eine Streckbremsung unterbunden wird.

Es kann eine weitere Sicherheitsmaßnahme ergriffen werden, nämlich dadurch dass eine Zeit erfasst wird, während der eine Streckbremsung durchgeführt wird, und dass beim Überschreiten einer vorgegebenen Zeitschwelle eine weitere Streckbremsung unterbunden wird. Auch hierdurch wird eine mögliche Überlastung der an der Streckbremsung beteiligten Komponenten verhindert.

Ebenfalls kann vorgesehen sein, dass während einer Streckbremsung die Aktivität der Betriebsbremse des Zugfahrzeugs überwacht wird und dass bei Aktivierung der Betriebsbremse des Zugfahrzeugs eine weitere Streckbremsung unterbunden wird. Eine Streckbremsung im speziellen Sinne ist dann nicht mehr erforderlich, da das Bremssystem des Nutzfahrzeugs insgesamt aktiviert ist und den Zug in einem gestreckten Zustand halten wird.

In diesem Zusammenhang kann nützlich sein, dass bei einem Unterschreiten einer vorgegebenen Drehzahlschwelle der Druck für die Anhängerbremsanlage verringert wird.

Weiterhin kann vorgesehen sein, dass bei einem Unterschreiten einer vorgegebenen Drehzahlschwelle die Kraftstoffzuführrate für den Motor des Nutzfahrzeugs erhöht wird.

Als Maßnahme gegen ein Absterben des Motors kann weiterhin vorgesehen sein, dass bei einem Unterschreiten einer vorgegebenen Drehzahlschwelle der Ladedruck eines Turboladers verringert wird.

Weiterhin ist es möglich, dass bei einem Unterschreiten einer vorgegebenen Drehzahlschwelle dem Motor des Nutzfahrzeugs Druckluft aus einem Druckluftbehälter einer Druckluftanlage des Nutzfahrzeugs zugeführt wird.

Ein Abwürgen des Motors kann auch dadurch verhindert werden, dass bei einem Unterschreiten einer vorgegebenen Drehzahlschwelle eine Kupplung in einem Antriebsstrang des Nutzfahrzeugs zumindest teilweise auskuppelt.

Es kann ebenfalls vorgesehen sein, dass bei einem Unterschreiten einer vorgegebenen Drehzahlschwelle ein Getriebe des Nutzfahrzeugs in eine Getriebestellung mit verringerter Übersetzung überführt wird.

Als weitere Maßnahme gegen ein Abwürgen des Motors kann vorgesehen sein, dass bei einem Unterschreiten einer vorgegebenen Drehzahlschwelle die Wirkung des Retardersystems des Nutzfahrzeugs verringert wird.

Ebenfalls kann dienlich sein, dass ein zum Zwecke einer Motorbremsung zwischen Hubräumen verschiedener Zylinder des Motors angeordnetes Bypass-Ventil zumindest teilweise geschlossen wird. Durch ein solches Bypass-Ventil wird während einer Motorbremsung Kompressionsarbeit verrichtet, indem ein Überströmen des komprimierten Volumens in den ansaugenden Kolben gestattet wird. Indem das Bypass-Ventil bei einem übermäßigen Drehzahlabfall geschlossen wird, kann die Wirkung der Motorbremsung herabgesetzt werden.

Weiterhin kann vorgesehen sein, dass eine Drosselklappe in einem Abgasstrom des Motors von einer drosselnden in eine weniger drosselnde Stellung überführt wird.

Wie im Zusammenhang mit dem erfindungsgemäßen Bremssystem bereits beschrieben wurde, ist bei dem erfindungsgemäßen Verfahren ebenfalls vorgesehen, dass der mindestens einen elektronischen Steuereinheit ein von dem manuell bedienbaren Signalgeber erzeugtes Signal zugeführt wird und in Abhängigkeit der Anwesenheit des Signals die Streckbremsfunktion unterdrückt wird.

Ebenfalls ist es nützlich, dass das Signal variabel ist, wobei mindestens eine Eigenschaft des Signals von der Betätigungsweise des auf verschiedene Weise betätigbaren Signalgebers abhängt und die mindestens eine Eigenschaft des Signals das Bremsverhalten des Anhängers beeinflusst.

Das erfindungsgemäße Verfahren kann auch dadurch günstig weitergebildet werden, dass die Betätigungszeit des Signalgebers das Bremsverhalten des Anhängers beeinflusst.

Es ist ebenfalls möglich, dass Raddrehzahlsensoren vorgesehen sind, deren Signale der mindestens einen elektronischen Steuereinheit zugeführt werden, und dass die im Zusammenhang mit der Bedingung für das Zulassen eines gepulsten Schaltens der Ventileinrichtung herangezogene Fahrzeuggeschwindigkeit aus Signalen der Drehzahlsensoren abgeleitet wird.

Die Erfindung wird nun mit Bezug auf die begleitenden Zeichnungen anhand besonders bevorzugter Ausführungsformen beispielhaft erläutert.
Es zeigen:
- Figur 1: einen Teil einer erfindungsgemäßen Bremsanlage;
- Figur 2: eine Diagrammdarstellung zur Erläuterung einer pulsweitenmodulierten Ansteuerung einer Ventileinrichtung;
- Figur 3: ein Blockschaltbild zur Erläuterung einer ersten Ausführungsform einer erfindungsgemäßen Bremsanlage;
- Figur 4: ein Blockschaltbild zur Erläuterung einer zweiten Ausführungsform einer erfindungsgemäßen Bremsanlage und
- Figur 5: eine Diagrammdarstellung zur Erläuterung einer pulsweitenmodulierten Ansteuerung einer Ventileinrichtung.

Bei der nachfolgenden Beschreibung der Zeichnungen bezeichnen gleiche Bezugszeichen gleiche oder vergleichbare Komponenten.

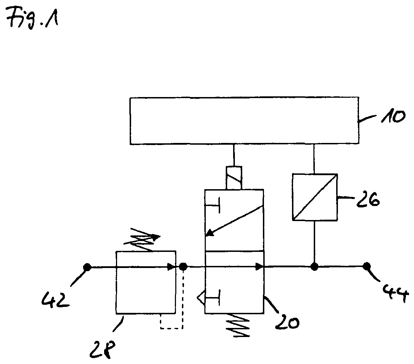

Figur 1 zeigt einen Teil einer erfindungsgemäßen Bremsanlage. Über einen Druckbegrenzer 28 wird einem 3/2-Wegeventil 20 von einer Druckluftversorgung 42 gelieferte Druckluft zugeführt. Ausgangsseitig steht das 3/2-Wegeventil 20 mit einem Anhängersteueranschluss 44 in Verbindung. Der ausgangsseitige Druck des 3/2-Wegeventils 20 ist mit einem Drucksensor 26 erfassbar. Dieser Drucksensor übermittelt die erfassten Informationen an eine elektronische Steuereinheit 10, die in Abhängigkeit hiervon und in Abhängigkeit anderer Bedingungen den Zustand des 3/2-Wegeventils 20 steuert beziehungsweise regelt. Um einen variablen Druck am Anhängersteueranschluss 44 gezielt zur Verfügung zu stellen, wird das 3/2-Wegeventil 20 pulsweitenmoduliert angesteuert.

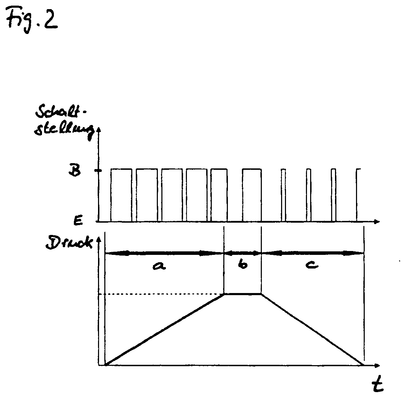

Figur 2 zeigt eine Diagrammdarstellung zur Erläuterung einer pulsweitenmodulierten Ansteuerung einer Ventileinrichtung. Das obere Diagramm zeigt den Schaltzustand der Ventileinrichtung 20 gemäß Figur 1. Im Schaltzustand B befindet sich die Ventileinrichtung 20 in ihrer belüftenden Stellung, während im Schaltzustand E die entlüftende Stellung vorliegt. Beispielsweise ist das 3/2-Wegeventile 20 im Schaltzustand B stromlos und im Schaltzustand E bestromt. Im unteren Diagramm ist die Entwicklung des Drucks am Anhängersteueranschluss 44 gemäß Figur 1 in Abhängigkeit der im oberen Diagramm gezeigten Schaltzustände des 3/2-Wegeventils 20 gezeigt. Während der Phase a ist das Verhältnis zwischen Belüftungszeit und Entlüftungszeit so abgestimmt, dass eine Druckzunahme stattfindet. Während der Phase b wird das Tastverhältnis für den Schaltzustand zugunsten der entlüftenden Schaltstellung geändert, so dass der Druck am Anhängersteueranschluss 44 gehalten werden kann. Gewinnt die entlüftende Schaltstellung noch einen höheren Zeitanteil gegenüber der belüftenden Schaltstellung, wie dies in der Phase c der Fall ist, so findet eine Druckabnahme statt. Der im unteren Diagramm dargestellte Druck kann je nach Realisierung der vorliegenden Erfindung ein dem Anhängersteuermodul zugeführter Steuerdruck, auf dessen Grundlage der Anhängerbremsdruck beeinflusst wird, oder direkt der Anhängerbremsdruck sein. Im letzten Fall könnte die Druckhaltephase b bei beispielsweise circa 8,5 bar eingestellt werden.

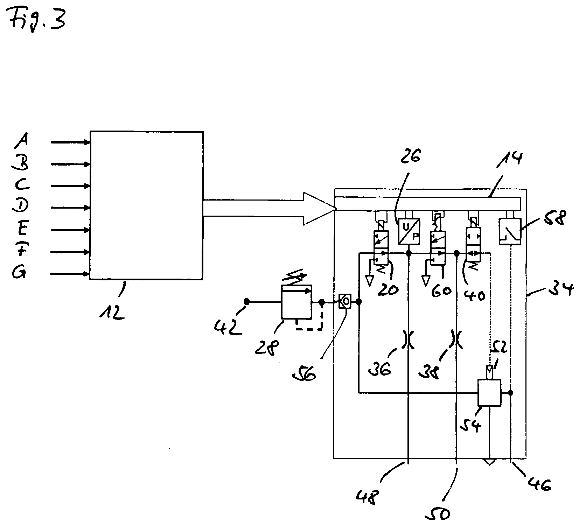

Figur 3 zeigt ein Blockschaltbild zur Erläuterung einer ersten Ausführungsform einer erfindungsgemäßen Bremsanlage. In diesem Beispiel ist die pulsweitenmoduliert steuerbare Ventileinrichtung 20 in eine elektropneumatische Steuereinheit 34 integriert, die sowohl einen Federspeicheranschluss 46 als auch zwei Steueranschlüsse 48, 50, die mit einem Steuereingang eines Anhängersteuermoduls koppelbar sind, aufweist. Vorzugsweise ist die elektropneumatische Steuereinheit 34 geeignet, die Funktionen eines elektronischen Feststellbremssystems zur Verfügung zu stellen. Hierzu enthält die Steuereinheit 34 eine elektronische Steuereinheit 14, die geeignet ist verschiedene Magnetventile anzusteuern, nämlich die im Zusammenhang mit der vorliegenden Erfindung wesentliche als 3/2-Wegeventil ausgelegte Ventileinrichtung 20 sowie ein 2/2-Wegeventil 40. In Abhängigkeit der Schaltstellung dieser genannten Ventileinrichtungen 20, 40 wird der Steuereingang 52 eines Relaisventils 54 angesteuert. Dem Relaisventil wird Arbeitsdruck von der Druckluftversorgung 42 über den Druckbegrenzer 28 und ein Rückschlagventil 56 geliefert, der in Abhängigkeit des am Steuereingang 52 anstehenden Steuerdrucks dem Federspeicheranschluss weitergeleitet wird. Ebenfalls ist ein Druckschalter 58 vorgesehen, über den erfassbar ist, ob der Federspeicheranschluss belüftet oder entlüftet ist, also ob die Feststellbremse eingelegt oder gelöst ist. In der dargestellten Stellung des 2/2-Wegeventils 40 kann der Federspeicheranschluss 46 in Abhängigkeit der Stellung des 3/2-Wegeventils 20 belüftet oder entlüftet werden. Wird das 2/2-Wegeventil 40 umgeschaltet, so wird der Druck am Federspeicheranschluss 46 gehalten.

Durch das Zusammenspiel des 3/2-Wegeventils 20 mit dem 2/2-Wegeventil 40 lässt sich auch eine Testfunktion für das Nutzfahrzeug realisieren, indem nämlich bei entlüftetem Federspeicheranschluss 46 über den Steueranschluss 28 der dort angeschlossene Steuereingang des Anhängersteuermoduls kurzzeitig belüftet wird. Die Belüftung dieses Steuereingangs hat ein Entlüften der Anhängerbremsanlage zur Folge, so dass das gesamte Nutzfahrzeug in diesem Zustand durch das Zugfahrzeug gehalten werden muss, wobei der entlüftete Zustand des Federspeicheranschlusses durch Umschalten des 2/2-Wegeventils 40 in seine Druckhaltstellung aufrechterhalten werden kann.

Eine weitere wichtige Aufgabe übernimmt das 3/2-Wegeventil 20 im Hinblick auf die Streckbremsfunktion. Indem das 3/2-Wegeventil 20 pulsweitenmoduliert durch die elektronischen Steuereinheiten 12, 14 angesteuert wird, kann ein gezielter Druck am Steueranschluss 48 für das Anhängersteuermodul zur Verfügung gestellt werden. Insbesondere kann eine Bremsung des Anhängers unabhängig von der Bremsung des Zugfahrzeugs erfolgen, so dass ein Auflaufen des Anhängers auf das Zugfahrzeug vermieden werden kann. Ob eine solche Streckbremsung erlaubt ist, hängt vom Fahrzustand des Fahrzeugs ab. Indem dieser berücksichtigt wird, können sicherheitskritische Gesichtspunkte, beispielsweise Lenkmanöver, berücksichtigt werden, und es kann sichergestellt werden, dass eine Pulsweitenmodulation des 3/2-Wegeventils 20 nur dann erfolgt, wenn tatsächlich die Streckbremsfunktionalität benötigt wird, wodurch die Lebensdauer des 3/2-Wegeventils 20 stark erhöht wird. Die Überprüfung, ob die Pulsweitenmodulation des 3/2-Wegeventils 20 grundsätzlich zugelassen ist, wird von den Signalen A, B, C, D, E und F abhängig gemacht. Diese Signale kennzeichnen die folgenden Fahrzustände des Fahrzeugs, beziehungsweise sie sind von diesen Fahrzuständen abgeleitet, etwa durch Vergleiche mit Schwellenwerten:
A: Geschwindigkeit des Fahrzeugs
B: Motordrehmoment
C: Retarderstatusinformation
D: Lenkwinkel beziehungsweise Raddifferenzdrehzahl
E: Zustand der Schalter für Gaspedal und Motorbremse
F: Neigung
G: Fahrerwunsch-Gebersignal

Die Informationen über diese Fahrzustände lassen sich aus verschiedensten Quellen beziehen. Die Fahrzeuggeschwindigkeit kann beispielsweise aus dem Antiblockiersystem oder vom Tachographen des Fahrzeugs bezogen werden. Ebenfalls können aktive Raddrehzahlsensoren verwendet werden, da deren Signale insbesondere bei niedrigen Geschwindigkeiten genauer sind als dasjenige vom Tachographen. Zusätzlich können Geschwindigkeitswerte des Navigationssystems als Absolutwerte mit eingerechnet werden. Das Drehmoment des Motors steht beispielsweise im Rahmen der Motorsteuerung zur Verfügung. Für den Lenkwinkel beziehungsweise die Raddifferenzdrehzahl sind Raddrehzahlsensoren vorhanden. Grundsätzlich können die Signale direkt oder über einen Datenbus bezogen werden. Zur Erfassung der Neigung des Fahrzeugs ist insbesondere noch festzustellen, dass diese durch eine Sensorik erfasst werden kann; die Neigungsinformation kann aber auch durch das Navigationssystem zur Verfügung gestellt werden.

Die diskutierten und unter Umständen weitere Signale beziehungsweise davon abgeleitete Größen werden der Steuereinheit 12 eingegeben. Bei dieser kann es sich insbesondere um ein Steuergerät mit einer Watch-Dog-Funktion handeln. Eine Watch-Dog-Funktion ist nützlich, da es sich im Zusammenhang mit der vorliegenden Erfindung um eine sicherheitsrelevante Steuerfunktion handelt, bei der ein Mikrocontroller und ein Computersystem fehlersicher sein und sich im Fehlerfall zumindest teilweise abschalten müssen. Derartige Steuergeräte sind vorteilhafterweise redundant mit Strom versorgt, und sie haben einen Schreib-Lesespeicher, um die zulässigen Steuer- und Regelparameter sowie vorgegebene Schwellenwerte, beispielsweise einen Geschwindigkeitsschwellenwert, sowie Fehlerzustände zu speichern. Das Steuergerät kann außerhalb der elektropneumatischen Steuereinheit 34 angeordnet sein, oder auch in diese integriert sein, insbesondere in baulicher Einheit mit der innerhalb der elektropneumatischen Steuereinheit 34 dargestellten elektronischen Steuereinheit 14. In Abhängigkeit der Signale A, B, C, D, E und F veranlasst die elektronische Steuereinheit 12 nun die pulsweitenmodulierte Ansteuerung des 3/2-Wegeventils 20, wobei eine pulsweitenmodulierte Ansteuerung insbesondere dann unterbunden werden kann, wenn aufgrund eines oder mehrer der der Steuereinheit zugeführten Informationen klar ist, das keine Streckbremsung stattfinden sollte.

Die elektropneumatische Steuereinheit 34 enthält ein weiteres elektrisch ansteuerbares 3/2-Wegeventil 60, das als bistabiles Ventil ausgestattet ist. Dieses Magnetventil 60 beliefert den Steueranschluss 50 der elektropneumatischen Steuereinheit 34 mit Druckluft, so dass die dargestellte elektropneumatische Steuereinheit 34 einen Steuerdruck für das Anhängersteuermodul wahlweise auf der Grundlage einer monostabilen Ventilauslegung, nämlich über das 3/2-Wegeventil 20, oder einer bistabilen Ventilauslegung, nämlich über das 3/2-Wegeventil 60 zur Verfügung stellen kann. Die elektropneumatische Steuereinheit 34 kann somit verschiedenen Anforderungsprofilen der Nutzfahrzeughersteller gerecht werden.

Eine weitere nützliche Eigenschaft der elektropneumatischen Steuereinheit 34 steht mit den Drosseln 36, 38 in Beziehung, die in den Leitungspfaden zu den Steueranschlüssen 48, 50 zum Anhängersteuermodul vorgesehen sind. Tritt beispielsweise am Steueranschluss 48 ein unerwarteter Druckluftverlust auf, so kann die Drossel 36 sicherstellen, dass dies nicht zu einer schlagartigen Entlüftung des Federspeicheranschlusses 46 führt.

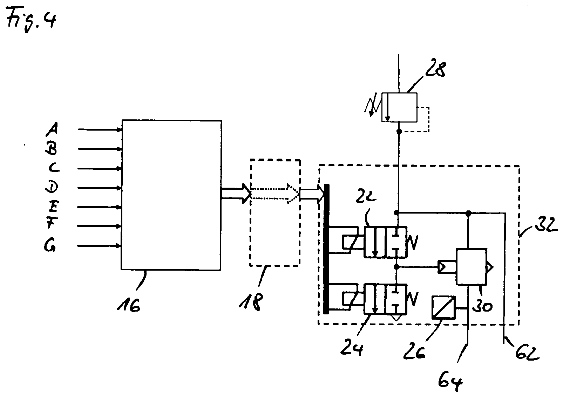

Figur 4 zeigt ein Blockschaltbild zur Erläuterung einer zweiten Ausführungsform einer erfindungsgemäßen Bremsanlage. Bei dem hier dargestellten Ausführungsbeispiel ist die pulsweitenmoduliert ansteuerbare Ventileinrichtung in das Anhängersteuermodul 32 integriert. Dieses weist einen Versorgungsleitungsanschluss 62 für den Anhänger und einen Anhängerbremsleitungsanschluss 64 auf. Die Versorgung des Anhängersteuermoduls 32 erfolgt wiederum über einen Druckbegrenzer 28, dem die pulsweitenmoduliert ansteuerbare Ventileinrichtung, hier zwei 2/2-Wegeventile 22, 24 aufweisend, nachgeschaltet ist. Die Ansteuerung der Ventileinrichtung 22, 24 erfolgt nach dem gleichen grundsätzlichen Prinzip, wie bereits im Zusammenhang mit Figur 3 erläutert wurde. Die Pulsweitenmodulation kann jedoch beispielsweise mit konstanter Pulslänge stattfinden, wobei zum Belüften der Anhängerbremsleitung das erste 2/2-Wegeventil 22 gepulst angesteuert wird, während das zweite 2/2-Wegeventil 24 stromlos bleibt, und zum Entlüften das zweite 2/2-Wegeventil 24 bei stromlosem erstem 2/2-Wegeventil 22 gepulst angesteuert wird. Zum Halten des Druckes bleiben beide 2/2-Wegeventile 22, 24 stromlos. Im vorliegenden Ausführungsbeispiel erfolgt die Druckversorgung der Anhängerbremsleitung über ein Relaisventil 30. Ebenfalls ist ein direkter Anschluss der Anhängerbremsleitung an die pulsweitenmoduliert ansteuerbaren Magnetventile 22, 24 denkbar. Weiterhin kann auch ein 3/2-Wegeventil anstelle der 2/2-Wegeventile zum Einsatz kommen. Im Hinblick auf den Drucksensor 26 ist zu erwähnen, dass dieser überwacht, ob der zum Anhänger ausgesteuerte Druck innerhalb eines zulässigen Regelfensters unter Einbeziehung der Vorgaben A bis G liegt. Weiterhin wird die Hysterese des Systems mit einbezogen. Es wird die Kontinuität des Druckanstieges mit Bezug auf die Toleranzen des Relaisventils 30 und in Abhängigkeit der Vorgaben A bis G berücksichtigt. Das Steuergerät 16 kann einen zusätzlichen elektrischen Anschluss aufweisen, über den ein am Steuergerät des Anhängers, beispielsweise dem Anhängersteuermodul 32, der Streckbremswunsch elektrisch weitergegeben wird.

Im Zusammenhang mit Figur 4 ist beispielhaft dargestellt, dass dem Steuergerät 16, das beispielsweise vergleichbar mit dem Steuergerät 12 gemäß Figur 3 aufgebaut sein kann, ein weiteres Steuergerät 18 nachgeschaltet sein kann, etwa ein dem Anhängersteuermodul eigenes Steuergerät, das als Slave-Steuergerät ausgelegt ist. Das Steuergerät 18 hat also beispielsweise keine CAN-Schnittstelle. Die Hauptrechenleistung wird von dem primären Steuergerät 16 vorgenommen, welches als redundantes Steuergerät mit redundanter Stromversorgung und einem EEProm-Speicher zur Parameter- und Schwellenwertabspeicherung sowie als Fehlerspeicher ausgelegt ist.

Die Lösung mit zwei 2/2-Wegeventilen mit oder ohne nachgeschaltetem Relaisventil ist auch im Zusammenhang mit der Integration der erfindungsgemäßen Funktionalität in die elektropneumatische Steuereinheit 34 gemäß Figur 3 möglich. Ebenfalls kann bei einer solchen elektropneumatischen Steuereinheit, wie sie in Figur 3 dargestellt ist, auch einem 3/2-Wegeventil ein Relaisventil nachgeschaltet werden.

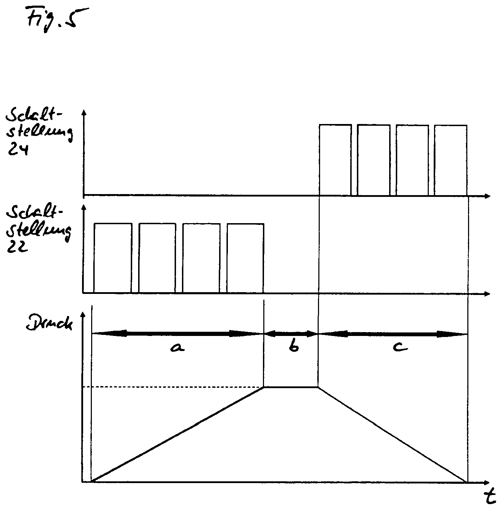

Figur 5 zeigt eine Diagrammdarstellung zur Erläuterung einer pulsweitenmodulierten Ansteuerung einer Ventileinrichtung. Hier sind die Schaltstellungen eines Belüftungsventils, beispielsweise des Ventils 22 gemäß Figur 4, und eines Entlüftungsventils, beispielsweise des Ventils 24 gemäß Figur 4, und die zugehörigen ausgesteuerten Druckverläufe, beispielsweise der dem Relaisventil 30 gemäß Figur 4 zugeführte Steuerdruck oder der von dem Relaisventil 30 am Anhängerbremsleitungsanschluss 64 zur Verfügung gestellte Arbeitsdruck dargestellt. Während des Druckaufbaus ist das Entlüftungsventil 24 permanent geschlossen, während das Belüftungsventil 22 gepulst angesteuert wird. Folglich kommt es zu einem Druckanstieg. Zum Druckhalten bleiben beide Ventile 22, 24 geschlossen. Während der Druckabbauphase bleibt das Druckaufbauventil 22 geschlossen, während das Entlüftungsventil 24 gepulst angesteuert wird und insofern seine Schaltstellung periodisch ändert.

### Bezugszeichenliste:

- 10: Steuereinheit
- 12: Steuereinheit
- 14: Steuereinheit
- 16: Steuereinheit
- 18: Steuereinheit
- 20: Ventileinrichtung
- 22: Ventileinrichtung
- 24: Ventileinrichtung
- 26: Drucksensor
- 28: Druckbegrenzer
- 30: Relaisventil
- 32: Anhängersteuermodul
- 34: Steuereinheit
- 36: Drossel
- 38: Drossel
- 40: 2/2-Wegeventil
- 42: Druckluftversorgung
- 44: Anhängersteueranschluss
- 46: Federspeicheranschluss
- 48: Steueranschluss
- 50: Steueranschluss
- 52: Steuereingang
- 54: Relaisventil
- 56: Rückschlagventil
- 58: Druckschalter
- 60: 3/2-Wegeventil
- 62: Versorgungsleitungsanschluss
- 64: Anhängerbremsleitungsanschluss

## Patentansprüche

1. Bremsanlage für ein mit einem Anhänger pneumatisch koppelbares Nutzfahrzeug, mit
- mindestens einer elektronischen Steuereinheit (10, 12, 14, 16, 18),
- einer durch die mindestens eine elektronische Steuereinheit (10, 12, 14, 16, 18) elektrisch schaltbaren Ventileinrichtung (20, 22, 24), wobei in einem Schaltzustand der Ventileinrichtung Druck für die Anhängerbremsanlage aufbaubar ist, der eine Bremsung des Anhängers veranlasst, und
- einem Drucksensor (26), der den Druck für die Anhängerbremsanlage erfasst und ein entsprechendes Signal an die elektronische Steuereinheit (10, 12, 14, 16, 18) übermittelt,
- wobei der Druck für die Anhängerbremsanlage von der elektronischen Steuereinheit (10, 12, 14, 16, 18) durch gepulstes Schalten der Ventileinrichtung (20, 22, 24) unter Berücksichtigung des von dem Drucksensor (26) erfassten Drucks für die Anhängerbremsanlage beeinflussbar ist,
**dadurch gekennzeichnet, dass** die elektronische Steuereinheit (10, 12, 14, 16, 18) das gepulste Schalten zum Herbeiführen einer Bremsung des Anhängers bei nicht aktiver Betriebsbremse des Zugfahrzeugs nur dann zulässt, wenn eine Bedingung vorliegt, bei der eine Bremsung des Anhängers trotz nicht aktiver Betriebsbremse des Zugfahrzeugs sinnvoll sein könnte, und eine solche Streckbremsung von einem manuell bedienbaren Signalgeber angefordert wird, dass der mindestens einen elektronischen Steuereinheit (10, 12, 14, 16, 18) ein von dem manuell bedienbaren Signalgeber erzeugbares Signal zuführbar ist und in Abhängigkeit der Anwesenheit des Signals die Streckbremsfunktion unterdrückbar ist, und dass die Bedingung dem Vorliegen mindestens eines der folgenden Zustände entspricht:
- die Fahrzeuggeschwindigkeit ist kleiner als ein Schwellenwert,
- das Gaspedals wird nicht betätigt,
- der Motor bremst,
- der Motor erzeugt kein nutzbares Drehmoment,
- ein Retardersystem ist aktiv,
- das Fahrzeug befindet sich auf einer Gefällestrecke.

2. Bremsanlage nach Anspruch 1, **dadurch gekennzeichnet, dass** der Ventileinrichtung (20, 22, 24) ein Druckbegrenzer (28) vorgeschaltet ist.

3. Bremsanlage nach Anspruch 1 oder 2, **dadurch gekennzeichnet, dass** die Ventileinrichtung ein 3/2-Wegeventil (20) ist.

4. Bremsanlage nach einem der Ansprüche 1 oder 2, **dadurch gekennzeichnet, dass** die Ventileinrichtung zwei 2/2-Wegeventile (22, 24) umfasst.

5. Bremsanlage nach einem der vorhergehenden Ansprüche, **dadurch gekennzeichnet, dass** die Ventileinrichtung (20) den Steuerdruck direkt zur Verfügung stellt.

6. Bremsanlage nach einem der Ansprüche 1 bis 5, **dadurch gekennzeichnet, dass** die Ventileinrichtung (22, 24) ein Relaisventil (30) ansteuert, welches den Steuerdruck zur Verfügung stellt.

7. Bremsanlage nach einem der vorhergehenden Ansprüche, **dadurch gekennzeichnet, dass** die Ventileinrichtung (22, 24) in ein Anhängersteuermodul (32) integriert ist, welches die Anhängerbremsanlage steuert und mit Druckluft versorgt.

8. Bremsanlage nach einem der Ansprüche 1 bis 6, **dadurch gekennzeichnet, dass** die Ventileinrichtung (20) in eine elektropneumatische Steuereinheit (34) integriert ist, welche die Feststellbremse des Zugfahrzeugs und die Anhängerbremsanlage über ein Anhängersteuermodul pneumatisch steuert.

9. Bremsanlage nach Anspruch 8, **dadurch gekennzeichnet, dass** in einem Leitungsstrang der elektronpneumatischen Steuereinheit (34), der mit einem Federspeicherzylinder der Feststellbremse des Zugfahrzeugs und mit einem Steuereingang des Anhängersteuermoduls in Verbindung steht, mindestens eine Drossel (36, 38) vorgesehen ist, die bei einem Druckabbau im Bereich des Steuereingangs des Anhängersteuermoduls einen Druckabbau in dem Federspeicherzylinder verzögert.

10. Bremsanlage nach Anspruch 9, **dadurch gekennzeichnet, dass** ein unerwarteter Druckabbau im Bereich des Steuereingangs des Anhängersteuermoduls durch den Drucksensor (26) erfassbar ist und der Druck in dem Federspeicherzylinder der Feststellbremse durch Umschalten eines Ventils (40) gehalten werden kann.

11. Bremsanlage nach einem der vorhergehenden Ansprüche, **dadurch gekennzeichnet, dass** das Signal variabel ist, wobei mindestens eine Eigenschaft des Signals von der Betätigungsweise des auf verschiedene Weise betätgbaren Signalgebers abhängt und die mindestens eine Eigenschaft des Signals das Bremsverhalten des Anhängers beeinflusst.

12. Bremsanlage nach einem der vorhergehenden Ansprüche, **dadurch gekennzeichnet, dass** die Betätigungszeit des Signalgebers das Bremsverhalten des Anhängers beeinflusst.

13. Bremsanlage nach einem der Ansprüche 2 bis 12, **dadurch gekennzeichnet, dass** Raddrehzahlsensoren vorgesehen sind, deren Signale der mindestens einen elektronischen Steuereinheit (10, 12, 14, 16, 18) zuführbar sind, und dass die im Zusammenhang mit der Bedingung für das Zulassen eines gepulsten Schaltens der Ventileinrichtung herangezogene Fahrzeuggeschwindigkeit aus Signalen der Drehzahlsensoren ableitbar sind.

14. Bremsanlage nach einem der vorhergehenden Ansprüche, **dadurch gekennzeichnet, dass** die Anhängerbremsanlage Scheibenbremsen aufweist.

15. Verfahren zum Steuern einer Bremsanlage für ein mit einem Anhänger pneumatisch koppelbares Nutzfahrzeug, mit
- mindestens einer elektronischen Steuereinheit (10, 12, 14, 16, 18),
- einer durch die mindestens eine elektronische Steuereinheit (10, 12, 14, 16, 18) elektrisch schaltbaren Ventileinrichtung (20, 22, 24), wobei in einem Schaltzustand der Ventileinrichtung Druck für die Anhängerbremsanlage aufbaubar ist, der eine Bremsung des Anhängers veranlasst, und
- einem Drucksensor (26), der den Druck für die Anhängerbremsanlage erfasst und ein entsprechendes Signal an die elektronische Steuereinheit (10, 12, 14, 16, 18) übermittelt,
- wobei der Druck für die Anhängerbremsanlage von der elektronischen Steuereinheit (10, 12, 14, 16, 18) durch gepulstes Schalten der Ventileinrichtung (20, 22, 24) unter Berücksichtigung des von dem Drucksensor (26) erfassten Drucks für die Anhängerbremsanlage beeinflusst wird,
**dadurch gekennzeichnet, dass** die elektronische Steuereinheit (10, 12, 14, 16, 18) das gepulste Schalten zum Herbeiführen einer Bremsung des Anhängers bei nicht aktiver Betriebsbremse des Zugfahrzeugs nur dann zulässt, wenn eine Bedingung vorliegt, bei der eine Bremsung des Anhängers trotz nicht aktiver Betriebsbremse des Zugfahrzeugs sinnvoll sein könnte, und eine solche Streckbremsung von einem manuell bedienbaren Signalgeber angefordert wird, wobei während der Streckbremsung die Drehzahl des Motors des Nutzfahrzeugs überwacht wird, dass der mindestens einen elektronischen Steuereinheit (10, 12, 14, 16, 18) ein von dem manuell bedienbaren Signalgeber erzeugtes Signal zugeführt wird und in Abhängigkeit der Anwesenheit des Signals die Streckbremsfunktion unterdrückt wird, und dass die Bedingung dem Vorliegen mindestens eines der folgenden Zustände entspricht:
- die Fahrzeuggeschwindigkeit ist kleiner als ein Schwellenwert,
- das Gaspedals wird nicht betätigt,
- der Motor bremst,
- der Motor erzeugt kein nutzbares Drehmoment,
- ein Retardersystem ist aktiv,
- das Fahrzeug befindet sich auf einer Gefällestrecke.

16. Verfahren nach Anspruch 15, **dadurch gekennzeichnet, dass** ein unerwarteter Druckabbau im Bereich des Steuereingangs des Anhängersteuermoduls durch den Drucksensor (26) erfasst wird und der Druck in dem Federspeicherzylinder der Feststellbremse durch Umschalten eines Ventils (40) gehalten wird.

17. Verfahren nach Anspruch 15 oder 16, **dadurch gekennzeichnet, dass** eine Temperatur im Bereich der Anhängerbremsanlage erfasst wird und beim Überschreiten einer vorgegebenen Temperaturschwelle der Druck für die Anhängerbremsanlage verringert wird.

18. Verfahren nach einem der Ansprüche 15 bis 17, **dadurch gekennzeichnet, dass** eine Temperatur im Bereich der Anhängerbremsanlage erfasst wird und beim Überschreiten einer vorgegebenen Temperaturschwelle eine Streckbremsung unterbunden wird.

19. Verfahren nach einem der Ansprüche 15 bis 18, **dadurch gekennzeichnet, dass** eine Zeit erfasst wird, während der eine Streckbremsung durchgeführt wird, und dass beim Überschreiten einer vorgegebenen Zeitschwelle eine weitere Streckbremsung unterbunden wird.

20. Verfahren nach einem der Ansprüche 15 bis 18, **dadurch gekennzeichnet, dass** während einer Streckbremsung die Aktivität der Betriebsbremse des Zugfahrzeugs überwacht wird und dass bei Aktivierung der Betriebsbremse des Zugfahrzeugs eine weitere Streckbremsung unterbunden wird.

21. Verfahren nach einem der Ansprüche 15 bis 21, **dadurch gekennzeichnet, dass** bei einem Unterschreiten einer vorgegebenen Drehzahlschwelle der Druck für die Anhängerbremsanlage verringert wird.

22. Verfahren nach einem der Ansprüche 15 bis 21, **dadurch gekennzeichnet, dass** bei einem Unterschreiten einer vorgegebenen Drehzahlschwelle die Kraftstoffzuführrate für den Motor des Nutzfahrzeugs erhöht wird.

23. Verfahren nach einem der Ansprüche 15 bis 22, **dadurch gekennzeichnet, dass** bei einem Unterschreiten einer vorgegebenen Drehzahlschwelle der Ladedruck eines Turboladers verringert wird.

24. Verfahren nach einem der Ansprüche 15 bis 23, **dadurch gekennzeichnet, dass** bei einem Unterschreiten einer vorgegebenen Drehzahlschwelle dem Motor des Nutzfahrzeugs Druckluft aus einem Druckluftbehälter einer Druckluftanlage des Nutzfahrzeugs zugeführt wird.

25. Verfahren nach einem der Ansprüche 15 bis 24, **dadurch gekennzeichnet, dass** bei einem Unterschreiten einer vorgegebenen Drehzahlschwelle eine Kupplung in einem Antriebsstrang des Nutzfahrzeugs zumindest teilweise auskuppelt.

26. Verfahren nach einem der Ansprüche 15 oder 25, **dadurch gekennzeichnet, dass** bei einem Unterschreiten einer vorgegebenen Drehzahlschwelle ein Getriebe des Nutzfahrzeugs in eine Getriebestellung mit verringerter Übersetzung überführt wird.

27. Verfahren nach einem der Ansprüche 15 bis 26, **dadurch gekennzeichnet, dass** bei einem Unterschreiten einer vorgegebenen Drehzahlschwelle die Wirkung des Retardersystems des Nutzfahrzeugs verringert wird.

28. Verfahren nach einem der Ansprüche 15 bis 27, **dadurch gekennzeichnet, dass** ein zum Zwecke einer Motorbremsung zwischen Hubräumen verschiedener Zylinder des Motors angeordnetes Bypass-Ventil zumindest teilweise geschlossen wird.

29. Verfahren nach einem der Ansprüche 15 bis 28, **dadurch gekennzeichnet, dass** eine Drosselklappe in einem Abgasstrom des Motors von einer drosselnden in eine weniger drosselnde Stellung überführt wird.

30. Verfahren nach einem der Ansprüche 15 bis 29, **dadurch gekennzeichnet, dass** das Signal variabel ist, wobei mindestens eine Eigenschaft des Signals von der Betätigungsweise des auf verschiedene Weise betätigbaren Signalgebers abhängt und die mindestens eine Eigenschaft des Signals das Bremsverhalten des Anhängers beeinflusst.

31. Verfahren nach einem der Ansprüche 15 bis 30, **dadurch gekennzeichnet, dass** die Betätigungszeit des Signalgebers das Bremsverhalten des Anhängers beeinflusst.

32. Verfahren nach einem der Ansprüche 15 bis 31, **dadurch gekennzeichnet, dass** Raddrehzahlsensoren vorgesehen sind, deren Signale der mindestens einen elektronischen Steuereinheit (10, 12, 14, 16, 18) zugeführt werden, und dass die im Zusammenhang mit der Bedingung für das Zulassen eines gepulsten Schaltens der Ventileinrichtung herangezogene Fahrzeuggeschwindigkeit aus Signalen der Drehzahlsensoren abgeleitet wird.

## Claims

1. Braking system for a commercial vehicle which can be coupled pneumatically to a trailer, having
- at least one electronic control unit (10, 12, 14, 16, 18),
- a valve device (20, 22, 24) which can be switched electrically by the at least one electronic control unit (10, 12, 14, 16, 18), wherein in a switched state of the valve device pressure can be built up for the trailer braking system, which pressure brings about braking of the trailer, and
- a pressure sensor (26) which senses the pressure for the trailer braking system and transmits a corresponding signal to the electronic control unit (10, 12, 14, 16, 18),
- wherein the pressure for the trailer braking system can be influenced by the electronic control unit (10, 12, 14, 16, 18) by pulsed switching of the valve device (20, 22, 24) taking into account the pressure, sensed by the pressure sensor (26), for the trailer braking system,
**characterised in that** the electronic control unit (10, 12, 14, 16, 18) permits the pulsed switching in order to bring about braking of the trailer when the service brake of the traction vehicle is not active only if a condition applies according to which braking of the trailer could be appropriate despite the service brake of the traction vehicle not being active, and such anti-jackknifing braking is requested by a manually operated signal generator, **in that** a signal generated by the manually operated signal generator can be fed to the at least one electronic control unit (10, 12, 14, 16, 18) and the anti-jackknifing braking function can be suppressed depending on the presence of I the signal, and **in that** the condition corresponds to the presence of at least one of the following states:
- the vehicle speed is lower than a threshold value,
- the accelerator pedal is not activated,
- the engine is braking,
- the engine is not generating any usable torque,
- a retarder system is active,
- the vehicle is located on a section of road with a negative gradient.

2. Braking system according to claim 1, **characterised in that** a pressure limiter (28) is connected upstream of the valve device (20, 22, 24).

3. Braking system according to claim 1 or 2, **characterised in that** the valve device is a 3/2-way valve (20).

4. Braking system according to claim 1 or 2, **characterised in that** the valve device comprises two 2/2-way valves (22, 24).

5. Braking system according to any of the preceding claims, **characterised in that** the valve device (20) makes the control pressure available directly.

6. Braking system according to any of claims 1 to 5, **characterised in that** the valve device (22, 24) actuates a relay valve (30) which makes the control pressure available.

7. Braking system according to any of the preceding claims, **characterised in that** the valve device (22, 24) is integrated into a trailer control module (32) which controls the trailer braking system and supplies it with compressed air.

8. Braking system according to any of the preceding claims, **characterised in that** the valve device (20) is integrated into an electropneumatic control unit (34) which pneumatically controls the parking brake of the traction vehicle and the trailer braking system via a trailer control module.

9. Braking system according to claim 8, **characterised in that in that** at least one throttle (36, 38) which, in the event of a reduction in pressure in the region of a control inlet of the trailer control module, delays a reduction in pressure in a spring-brake cylinder, is provided in a line system of the electropneumatic control unit (34), which line system is connected to the spring-brake cylinder of the parking brake of the traction vehicle and to the control inlet of the trailer control module.

10. Braking system according to claim 9, **characterised in that** an unexpected reduction in pressure in the region of the control inlet of the trailer control module can be sensed by the pressure sensor (26), and the pressure in the spring-brake cylinder of the parking brake can be held by switching over a valve (40).

11. Braking system according to any of the preceding claims, **characterised in that** the signal is variable, wherein at least one property of the signal depends on the method of activation of the variably actuable signal generator, and the at least one property of the signal influences the braking behaviour of the trailer.

12. Braking system according to any of the preceding claims, **characterised in that** the activation time of the signal generator influences the braking behaviour of the trailer.

13. Braking system according to any of claims 2 to 12, **characterised in that** wheel speed sensors are provided whose signals can be fed to the at least one electronic control unit (10, 12, 14, 16, 18), and **in that** the vehicle speed which is used in conjunction with the condition for the approval of pulsed switching of the valve device can be derived from signals of the speed sensors.

14. Braking system according to any of the preceding claims, **characterised in that** the trailer braking system has disc brakes.

15. Method for controlling a braking system for a commercial vehicle which can be coupled pneumatically to a trailer, having
- at least one electronic control unit (10, 12, 14, 16, 18),
- a valve device (20, 22, 24) which can be switched electrically by the at least one electronic control unit (10, 12, 14, 16, 18), wherein in a switched state of the valve device pressure can be built up for the trailer braking system, which pressure brings about braking of the trailer, and
- a pressure sensor (26) which senses the pressure for the trailer braking system and transmits a corresponding signal to the electronic control unit (10, 12, 14, 16, 18),
- wherein the pressure for the trailer braking system is influenced by the electronic control unit (10, 12, 14, 16, 18) by pulsed switching of the valve device (20, 22, 24) taking into account the pressure, sensed by the pressure sensor (26), for the trailer braking system,
**characterised in that** the electronic control unit (10, 12, 14, 16, 18) permits the pulsed switching in order to bring about braking of the trailer when the service brake of the traction vehicle is not active only if a condition applies according to which braking of the trailer could be appropriate despite the service brake of the traction vehicle not being active, and such anti-jackknifing braking is requested by a signal generator, wherein the speed of the engine of the commercial vehicle is monitored during the anti-jackknifing braking, **in that in that** a signal generated by the manually operated signal generator is fed to the at least one electronic control unit (10, 12, 14, 16, 18) and the anti-jackknifing braking function is suppressed depending on the presence of the signal, and **in that** the condition corresponds to the presence of at least one of the following states:
- the vehicle speed is lower than a threshold value,
- the accelerator pedal is not activated,
- the engine is braking,
- the engine is not generating any usable torque,
- a retarder system is active,
- the vehicle is located on a section of road with a negative gradient.

16. Method according to claim 15, **characterised in that** an unexpected reduction in pressure in the region of the control inlet of the trailer control module is sensed by the pressure sensor (26), and the pressure in the spring-brake cylinder of the parking brake is held by switching over a valve (40).

17. Method according to claim 15 or 16, **characterised in that** a temperature in the region of the trailer braking system is sensed, and when a predefined temperature threshold is exceeded the pressure for the trailer braking system is reduced.

18. Method according to any of claims 15 to 17, **characterised in that** a temperature in the region of the trailer braking system is sensed, and when a predefined temperature threshold is exceeded anti-jackknifing braking is prohibited.

19. Method according to any of claims 15 to 18, **characterised in that** a time during which anti-jackknifing braking is carried out is sensed, and **in that** when a predefined time threshold is exceeded further anti-jackknifing braking is prohibited.

20. Method according to any of claims 15 to 18, **characterised in that** during anti-jackknifing braking the activity of the service brake of the traction vehicle is monitored, and **in that** when the service brake of the traction vehicle is activated further anti-jackknifing braking is prohibited.

21. Method according to any of claims 15 to 20, **characterised in that** the pressure for the trailer braking system is reduced when a predefined rotational speed threshold is undershot.

22. Method according to any of claims 15 to 21, **characterised in that** when a predefined rotational speed threshold is undershot the rate of supply of fuel to the engine of the commercial vehicle is increased.

23. Method according to any of claims 15 to 22, **characterised in that** when a predefined rotational speed threshold is undershot the charge pressure of a turbocharger is reduced.

24. Method according to any of claims 15 to 23, **characterised in that** when a predefined rotational speed threshold is undershot compressed air is fed to the engine of the commercial vehicle from a compressed air vessel of a compressed air system of the commercial vehicle.

25. Method according to any of claims 15 to 24, **characterised in that** a clutch in a drive train of the commercial vehicle is at least partially opened when a predefined rotational speed threshold is undershot.

26. Method according to any of claims 15 to 25, **characterised in that** a gearbox of the commercial vehicle is adjusted to a position with a reduced transmission ratio when a predefined rotational speed threshold is undershot.

27. Method according to any of claims 15 to 26, **characterised in that** the effect of the retarder system of the commercial vehicle is reduced when a predefined rotational speed threshold is undershot.

28. Method according to any of claims 15 to 27, **characterised in that** a bypass valve which is arranged between swept volumes of different cylinders of the engine for the purpose of engine braking is at least partially closed.

29. Method according to any of claims 15 to 28, **characterised in that** a throttle valve in an exhaust stream of the engine is adjusted from a throttling position into a less throttling position.

30. Method according to any of claims 15 to 29, **characterised in that** the signal is variable, wherein at least one property of the signal depends on the method of activation of the variably actuable signal generator, and the at least one property of the signal influences the braking behaviour of the trailer.

31. Method according to any of claims 15 to 30, **characterised in that** the actuation time of the signal generator influences the braking behaviour of the trailer.

32. Method according to any of claims 15 to 31, **characterised in that** wheel speed sensors are provided whose signals are fed to the at least one electronic control unit (10, 12, 14, 16, 18), and **in that** the vehicle speed which is used in conjunction with the condition for the approval of pulsed switching of the valve device is derived from signals of the rotational speed sensors.

## Revendications

1. Système de frein d'un véhicule utilitaire pouvant être attelé pneumatiquement à une remorque, comprenant
- au moins une unité (10, 12, 14, 16, 18) électronique de commande,
- un dispositif (20, 22, 24) de soupape pouvant être commuté électriquement par la au moins une unité (10, 12, 14, 16, 18) électronique de commande, dans lequel, dans un état de commutation du dispositif de soupape, il peut être établi, pour le système de frein de remorque, de la pression, qui provoque un freinage de la remorque et
- un capteur (26) de pression, qui détecte la pression pour le système de frein de remorque et transmet un signal correspondant à l'unité (10, 12, 14, 16, 18) électronique de commande,
- dans lequel la pression pour le système de frein de remorque peut être influencée par l'unité (10, 12, 14, 16, 18) électronique de commande par des commutations pulsées du dispositif (20, 22, 24) de soupape, en tenant compte de la pression, détectée par le capteur (28) de pression, pour l'installation de frein de remorque,
**caractérisé en ce que** l'unité (10, 12, 14, 16, 18) électronique de commande n'autorise la commutation puisée, pour provoquer un freinage de la remorque, alors que le frein de service du véhicule de traction n'est pas actif, que si une condition est remplie, suivant laquelle un freinage de la remorque pourrait être utile, bien que le frein de service du véhicule de traction ne soit pas actif, et que si un freinage de maintien en ligne de ce genre est demandé par un donneur de signal pouvant être actionné manuellement, **en ce qu'**il peut être envoyé, à la au moins une unité (10, 12, 14, 16, 18) électronique de commande, un signal pouvant être produit par le donneur de signal pouvant être actionné manuellement et, en fonction de la présence du signal, la fonction de frein de maintien en ligne peut être supprimée et **en ce que** la condition correspond à la présence d'au moins l'un des états suivants :
- la vitesse du véhicule est plus petite qu'une vitesse de seuil,
- la pédale d'accélérateur n'est pas actionnée,
- le moteur freine,
- le moteur ne produit pas de couple utile,
- un système ralentisseur est actif,
- le véhicule se trouve sur une pente.

2. Système de frein suivant la revendication 1, **caractérisé en ce qu'**un limiteur (28) de pression est monté en amont du dispositif (20, 22, 24) de soupape.

3. Système de frein suivant la revendication 1 ou 2, **caractérisé en ce que** le dispositif de soupape est une soupape (20) à 3/2 voies.

4. Système de frein suivant l'une des revendications 1 ou 2, **caractérisé en ce que** le dispositif de soupape comprend deux soupapes (22, 24) à 2/2 voies.

5. Système de frein suivant l'une des revendications précédentes, **caractérisé en ce que** le dispositif (20) de soupape met la pression de commande directement à disposition.

6. Système de frein suivant l'une des revendications 1 à 5, **caractérisé en ce que** le dispositif (22, 24) de soupape commande une soupape (30) relais, qui met la pression de commande à disposition.

7. Système de frein suivant l'une des revendications précédentes, **caractérisé en ce que** le dispositif (22, 24) de soupape est intégré à un module (32) de commande de remorque, qui commande le système de frein de remorque et l'alimente en air comprimé.

8. Système de frein suivant l'une des revendications 1 à 6, **caractérisé en ce que** le dispositif (20) de soupape est intégré à une unité (34) électropneumatique de commande, qui commande pneumatiquement le frein de stationnement du véhicule de traction et le système de frein de remorque par un module de commande de remorque.

9. Système de frein suivant la revendication 8, **caractérisé en ce que**, dans un tronçon de ligne de l'unité (34) électropneumatique de commande, qui est en liaison avec un cylindre à ressort accumulateur du frein de stationnement du véhicule de traction et avec une entrée de commande du module de commande de remorque, est prévu au moins un étranglement (36, 38), qui, s'il se produit une suppression de la pression dans la région de l'entrée de commande du module de commande de remorque, retarde une suppression de la pression dans le cylindre à ressort accumulateur.

10. Système de frein suivant la revendication 9, **caractérisé en ce qu'**une suppression inattendue de la pression dans la région de l'entrée de commande du module de commande de remorque peut être détectée par un capteur (26) de pression et la pression dans le cylindre à ressort accumulateur du frein de stationnement peut être maintenue par commutation d'une soupape (40).

11. Système de frein suivant l'une des revendications précédente, **caractérisé en ce que** le signal est variable, au moins une propriété du signal dépendant du mode d'actionnement du donneur de signal pouvant être actionné de diverses façon et la au moins une propriété du signal influe sur le comportement au freinage de la remorque.

12. Système de frein suivant l'une des revendications précédentes, **caractérisé en ce que** la durée d'actionnement du donneur de signal influe sur le comportement au freinage de la remorque.

13. Système de frein suivant l'une des revendications 2 à 12, **caractérisé en ce que** sont prévus des capteurs de vitesse de rotation de roue, dont les signaux peuvent être envoyés à la au moins une unité (10, 12, 14, 16, 18) électronique de commande et **en ce que** la vitesse du véhicule, mise à profit en liaison avec la condition d'autorisation d'une commutation pulsée du dispositif de soupape, peut être déduite de signaux des capteurs de vitesse de rotation.

14. Système de frein suivant l'une des revendications précédentes, **caractérisé en ce que** le système de frein de remorque a des freins à disque.

15. Procédé de commande d'un système de frein d'un véhicule utilitaire pouvant être attelé pneumatiquement à une remorque, comprenant
- au moins une unité (10, 12, 14, 16, 18) électronique de commande,
- un dispositif (20, 22, 24) de soupape pouvant être commuté électriquement par la au moins une unité (10, 12, 14, 16, 18) électronique de commande, dans lequel, dans un état de commutation du dispositif de soupape, il peut être établi, pour le système de frein de remorque, de la pression, qui provoque un freinage de la remorque et
- un capteur (26) de pression, qui détecte la pression pour le système de frein de remorque et transmet un signal correspondant à l'unité (10, 12, 14, 16, 18) électronique de commande,
- dans lequel on influe sur la pression du système de frein de remorque, par l'unité (10, 12, 14, 16, 18) électronique de commande, par des commutations puisées du dispositif (20, 22, 24) de soupape, en tenant compte de la pression, détectée par le capteur (26) de pression, pour le système de frein de remorque,
**caractérisé en ce que** l'unité (10, 12, 14, 16, 18) électronique de commande n'autorise la commutation puisée, pour provoquer un freinage de la remorque, alors que le frein de service du véhicule de traction n'est pas actif, que si une condition est remplie, suivant laquelle un freinage de la remorque pourrait être utile, bien que le frein de service du véhicule de traction ne soit pas actif, et que si un freinage de maintien en ligne de ce genre est demandé par un donneur de signal pouvant être actionné manuellement, dans lequel, pendant le freinage de maintien en ligne, on contrôle le régime du moteur du , véhicule utilitaire, **en ce que** l'on envoie, à la au moins une unité (10, 12, 14, 16, 18) électronique de commande, un signal produit par le donneur de signal pouvant être actionné manuellement et, en fonction de la présence du signal, on supprime la fonction de frein de maintien en ligne, et **en ce que** la condition correspond à la présence d'au moins l'un des états suivants :
- la vitesse du véhicule est plus petite qu'une vitesse de seuil,
- la pédale d'accélérateur n'est pas actionnée,
- le moteur freine,
- le moteur ne produit pas de couple utile,
- un système ralentisseur est actif,
- le véhicule se trouve sur une pente.

16. Procédé suivant la revendication 15, **caractérisé en ce que** l'on détecte, par le capteur (26) de pression, une suppression inattendue de la pression dans la région de l'entrée de commande du module de commande de remorque et on maintient la pression dans le cylindre à ressort accumulateur du frein de stationnement par commutation d'une soupape (40).

17. Procédé suivant la revendication 15 ou 16, **caractérisé en ce que** l'on détecte une température dans la région du système de frein de remorque et, si un seuil de température donné à l'avance est dépassé, on abaisse la pression pour le système de frein de remorque.

18. Procédé suivant l'une des revendications 15 à 17, **caractérisé en ce que** l'on détecte une température dans la région du système de frein de remorque et, si un seuil de température donné à l'avance est dépassé, on supprime un freinage de maintien en ligne.

19. Procédé suivant l'une de revendications 15 à 18, **caractérisé en ce que** l'on détecte un temps pendant un freinage de maintien en ligne et **en ce que**, si un seuil de temps donné à l'avance est dépassé, on supprime un freinage de maintien en ligne supplémentaire.

20. Procédé suivant l'une des revendications 15 à 18, **caractérisé en ce que**, pendant un freinage de maintien en ligne, on contrôle l'activité du frein de service du véhicule de traction et **en ce que**, si le frein de service du véhicule de traction est activé, on supprime un freinage supplémentaire de maintien en ligne.

21. Procédé suivant l'une des revendications 15 à 21, **caractérisé en ce que**, si on passe en dessous d'un seuil de régime donné à l'avance, on diminue la pression pour le système de frein de remorque.

22. Procédé suivant l'une des revendications 15 à 21, **caractérisé en ce que**, si l'on passe en dessous d'un seuil de régime donné à l'avance, on augmente le taux d'apport de carburant au moteur du véhicule utilitaire.

23. Procédé suivant l'une des revendications 15 à 22, **caractérisé en ce que**, si l'on passe en dessous d'un seuil de régime donné à l'avance, on diminue la pression de suralimentation d'un turbocompresseur.

24. Procédé suivant l'une des revendications 15 à 23, **caractérisé en ce que**, si l'on passe en dessous d'un seuil de régime donné à l'avance, on envoie au moteur du véhicule utilitaire de l'air comprimé d'un réservoir à air comprimé d'un système à air comprimé du véhicule utilitaire.

25. Procédé suivant l'une des revendications 15 à 24, **caractérisé en ce que**, si l'on passe en dessous d'un seuil de régime donné à l'avance, on découple, au mois en partie, un accouplement d'une chaîne cinématique du véhicule utilitaire.

26. Procédé suivant l'une des revendications 15 ou 25, **caractérisé en ce que**, si l'on passe en dessous d'un seuil de régime donné à l'avance, on met une transmission du véhicule utilitaire en une position de démultiplication plus petite.

27. Procédé suivant l'une des revendications 15 à 26, **caractérisé en ce que**, si l'on passe en dessous d'un seuil de régime donné à l'avance, on diminue l'effet du système ralentisseur du véhicule utilitaire.

28. Procédé suivant l'une des revendications 15 à 27, **caractérisé en ce qu'**en vue d'obtenir un freinage par le moteur, on ferme, au moins en partie, une soupape de dérivation, montée entre des cylindrées de divers cylindres du moteur.

29. Procédé suivant l'une des revendications 15 à 28, **caractérisé en ce que** l'on fait passer un papillon d'un courant de gaz d'échappement du moteur d'une position d'étranglement à une position de moindre étranglement.

30. Procédé suivant l'une des revendications 15 à 29, **caractérisé en ce que** le signal est variable, au moins une propriété du signal dépendant du mode d'actionnement du donneur de signal pouvant être actionné de diverses façon et la au moins une propriété du signal influe sur le comportement au freinage de la remorque.

31. Procédé suivant l'une des revendications 15 à 30, **caractérisé en ce que** la durée d'actionnement du donneur de signal influe sur le comportement au freinage de la remorque.

32. Procédé suivant l'une des revendications 15 à 31, **caractérisé en ce qu'**il est prévu des capteurs de vitesse de rotation de roue, dont on envoie les signaux à la au moins une unité (10, 12, 14, 16, 18) électronique de commande et **en ce que** l'on déduit de signaux des capteurs de vitesse de rotation la vitesse du véhicule mise à profit en liaison avec la condition d'autorisation d'une commutation pulsée du dispositif de soupape.
